# EUROPEAN PATENT SPECIFICATION

(11) **EP 3 412 451 B1**
(45) Date of publication and mention of the grant of the patent: **22.04.2020**
(21) Application number: 17747440.0
(22) Date of filing: 01.02.2017
(51) Int. Cl.: B32B 27/30, B32B 27/40, F16C 13/00, G03G 15/00, G03G 15/08

(54) **LAMINATE, DEVELOPING MEMBER, AND LAMINATE MANUFACTURING METHOD**
LAMINAT, ENTWICKLUNGSELEMENT UND LAMINATHERSTELLUNGSVERFAHREN
STRATIFIÉ, ÉLÉMENT DE DÉVELOPPEMENT, ET PROCÉDÉ DE FABRICATION DE STRATIFIÉ

(30) Priority: 02.02.2016 JP 2016018155
(43) Date of publication of application: 12.12.2018
(73) Proprietor: Bridgestone Corporation, Tokyo 104-8340 (JP)
(72) Inventor: OSAKU, Akihide, Tokyo 104-8340 (JP); OKUMOTO, Kaori, Tokyo 104-8340 (JP)
(74) Representative: Oxley, Robin John George
(86) International application number: PCT/JP2017/003551
(87) International publication number: WO 2017/135284

(56) References cited:
- EP-A1- 2 672 326
- JP-A- 2011 206 924
- JP-A- 2012 030 586
- JP-A- 2012 159 736
- JP-A- 2013 045 045
- JP-A- 2014 152 915
- JP-A- 2015 120 253
- JP-A- 2016 010 949

## Description

### TECHNICAL FIELD

The present disclosure relates to a laminate, a developing member, and a method for manufacturing the laminate.

### BACKGROUND ART

PTL1 discloses a technique for reducing production costs in a method for manufacturing a foam roller that comprises a laminate of an elastic layer and a solid layer. When such a foam roller as described in PTL1 is used for example as a developing member, it is desired that the laminate exhibit higher elasticity (i.e. higher flexibility) and higher adhesion between layers

PTL2 discloses an elastic roller comprising successively on the outer periphery of a shaft (1) an elastic layer (2), an intermediate layer (3), and a surface layer (4). The surface layer (4) contains a urethane (meth)acrylate oligomer obtained by allowing polybutadiene polyol or hydrogenated polybutadiene polyol, polyisocyanate, and (meth)acrylate having a hydroxyl group to react. The elastic layer (2) of the roller can be formed from a composition containing a UV curable resin, a photopolymerization initiator, and an ionic conductive agent. The intermediate layer (3) contains a urethane (meth)acrylate oligomer using the above-mentioned polybutadiene-based polyol, and those containing (A) a urethane (meth)acrylate oligomer and (B) a (meth)acrylate monomer can be suitably used. The number of functional groups of the (A) urethane (meth)acrylate oligomer is preferably 3.0 or less, The (A) urethane (meth)acrylate oligomer, can be manufactured by synthesizing a urethane prepolymer from the above-mentioned polybutadiene-based polyol and a polyisocyanate, and then adding (meth)acrylate having a hydroxyl group to the thus obtained urethane prepolymer. The (B) (meth)acrylate monomer is a monomer having one or more acryloyloxy group(s) (CH2=CHCOO-) or methacryloyloxy group(s) (CH2=C(CH3)COO-). The (B) (meth)acrylate monomer functions as a reactive diluent, and is cured by UV. The number of functional groups of the (B) (meth)acrylate monomer is preferably 3.0 or less.

### CITATION LIST

### Patent Literature

PTL1: JP2004090430A
PTL2: EP2672326 A1

### SUMMARY

An object of the present disclosure is to provide a laminate which exhibits excellent elasticity and improved adhesion between layers. Another object of the present disclosure is to provide a developing member which exhibits excellent elasticity and improved adhesion between layers. Yet another object of the present disclosure is to provide a method for manufacturing a laminate, which method enables to provide a laminate which exhibits excellent elasticity and improved adhesion between layers.

A laminate of the present disclosure comprises a base layer, an intermediate layer formed on the base layer, and a surface layer formed on the intermediate layer, wherein:
the base layer is a polymerized product of a base layer composition containing at least compound A having a (meth)acryloyl group in a molecule thereof;
the intermediate layer is a polymerized product of an intermediate layer composition containing (i) compound B having two or more functional groups in a molecule thereof, at least one of the functional groups being (meth)acryloyl group, and (ii) compound C having two or more functional groups in a molecule thereof, at least one of the functional groups being hydroxyl group;
the surface layer is a polymerized product of a surface layer composition containing at least compound D having an isocyanate group in a molecule thereof;
the (meth)acryloyl group in the base layer is bonded to the (meth)acryloyl group in the intermediate layer composition; and
the hydroxyl group in the intermediate layer is bonded to the isocyanate group in the surface layer composition.

The laminate of the present disclosure exhibits excellent elasticity and improved adhesion between layers.

As used herein, the term "(meth)acrylate" refers to at least one of acrylate and methacrylate.

As used herein, the term "(meth)acryloyl" refers to at least one of acryloyl and methacryloyl, and the term "(meth)acryloyl group" refers to at least one of acryloyl group (CH₂=CHCO-) and methacryloyl group (CH₂=C(CH₃)CO-).

It is preferred in the laminate of the present disclosure that the compound B has an urethane skeleton in a molecule thereof.

This configuration further improves the elasticity of the intermediate layer and therefore the elasticity of the laminate as a whole.

It is preferred in the laminate of the present disclosure that the compound B has two (meth)acryloyl groups in a molecule thereof and the compound C has a hydroxyl group and a (meth)acryloyl group in a molecule thereof.

This configuration further improves the elasticity of the intermediate layer and the adhesion of the intermediate layer to the surface layer and to the base layer.

It is preferred in the laminate of the present disclosure that the mass blending ratio of the compound B and the compound C in the intermediate layer composition is in the range of 30:70 to 95:5.

This configuration makes it possible to improve the processability of the intermediate layer composition as well as the elasticity of the intermediate layer.

It is preferred in the laminate of the present disclosure that the base layer and the surface layer are each made of polyurethane.

This configuration makes it possible to further improve adhesion between the base layer and the intermediate layer.

A developing member of the present disclosure comprises the laminate of the present disclosure.

The developing member of the present disclosure exhibits excellent elasticity and improved adhesion between layers.

A method of the present disclosure for manufacturing a laminate is a method for manufacturing the laminate of the present disclosure, which comprises:
a base layer forming step for forming the base layer by heating the base layer composition;
an intermediate layer forming step for forming the intermediate layer on the base layer by coating the base layer formed by the base layer forming step with the intermediate layer composition, and irradiating the intermediate layer composition with energy rays to allow the (meth)acryloyl group in the base layer to react with the (meth)acryloyl group in the intermediate layer composition, wherein the intermediate layer composition comprises a photopolymerization initiator; and
a surface layer forming step for forming the surface layer bonded to the intermediate layer by coating the intermediate layer formed by the intermediate layer forming step with the surface layer composition, and heating the surface layer composition to allow the hydroxyl group in the intermediate layer to react with the isocyanate group in the surface layer composition.

According to the method of the present invention for manufacturing a laminate, it is possible to obtain a laminate which exhibits excellent elasticity and improved adhesion between layers.

According to the present disclosure, it is possible to provide a laminate which exhibits excellent elasticity and improved adhesion between layers. Further, according to the present disclosure, it is possible to provide a developing member which exhibits excellent elasticity and improved adhesion between layers. Yet further, according to the present disclosure, it is possible to provide a method for manufacturing a laminate, which method enables to obtain a laminate which exhibits excellent elasticity and improved adhesion between layers.

### BRIEF DESCRIPTION OF THE DRAWINGS

In the accompanying drawings, wherein:
FIG. 1 is a sectional view of an embodiment of a laminate according to the present disclosure; and
FIG. 2 is a partial sectional view of an example of a developing roller as an embodiment of a developing member according to the present disclosure.

### DETAILED DESCRIPTION

An embodiment of the present disclosure will be described hereinafter with reference to the drawings according to necessity.

### (Laminate)

A laminate of the present disclosure comprises at least a base layer, an intermediate layer formed on the base layer, a surface layer formed on the intermediate layer, and optionally comprise additional layers.

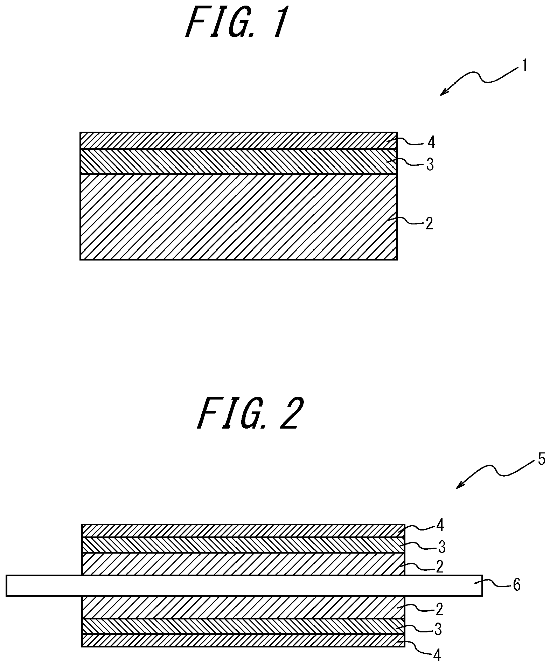

FIG. 1 is a sectional view of an embodiment of the laminate according to the present disclosure. The laminate shown in FIG. 1 comprises a base layer 2, an intermediate layer 3 formed on the base layer 2, and a surface layer 4 formed on the intermediate layer 3.

### <Base layer>

The base layer refers to a layer situated at the lowest part of the laminate of the present disclosure. The base layer is a polymerized product of a base layer composition containing at least compound A having a (meth)acryloyl group in a molecule thereof.

Examples of materials of the base layer include polyurethanes having (meth)acryloyl group; polyesters, epoxy resins, and vulcanized rubbers each having (meth)acryloyl group; . These materials may be used singly or in combination.

Of them, polyurethanes having (meth)acryloyl group are advantageous because urethane bonds are obtained through thermal polymerization without causing reactions of radically reactive (meth)acryloyl groups, whereby a base layer having many (meth)acryloyl groups remaining intact therein can be obtained so that adhesion between the base layer and the intermediate layer further improves.

The (meth)acryloyl groups remaining intact in the base layer can cause radical reactions. Accordingly, coating the base layer with a coating material having (meth)acryloyl groups for the intermediate layer and then causing a curing reaction between the (meth)acryloyl groups by a radical polymerization initiator will result in copolymerization of the (meth)acryloyl groups of the base layer and the intermediate layer, thereby forming chemical bonds between these two layers. The presence of a large number of chemical bonds between the base layer and the intermediate layer improves adhesion between the two layers. It is therefore important to maintain a proportion of the (meth)acryloyl groups remaining intact at a certain value or more.

### «Base layer composition»

The base layer composition contains at least compound A and also optionally contains additional components.

### -Compound A-

The compound A is not particularly restricted and may be appropriately selected in accordance with the application as long as the compound A has a (meth)acryloyl group in a molecule thereof. Examples of the compound A include (meth)acrylate containing hydroxyl group, (meth)acrylate containing isocyanate group, (meth)acrylate containing epoxy group, . These examples may be used singly or in combination.

Among these examples, (meth)acrylate containing hydroxyl group, which does not react unless isocyanate is added, is preferred in terms of storage stability as a raw coating material. (Meth)acrylate containing isocyanate group is also preferred because it can be cured solely and does not allow residual low-molecular weight compounds to remain in the base layer.

### -Additional components optionally included in the base layer composition-

Additional components which are optionally included in the base layer composition are not particularly restricted and may be appropriately selected in accordance with the application. Examples of additional components include polyols, isocyanates, urethane bond forming catalysts, foam stabilizers, solvents, ion conductive agents, fillers, peptizers, plasticizers, softening agents, tackifiers, anti-tack agents, separation agents, mold-releasing agents, bulking agents, colorants, cross-linking agents, vulcanizing agents, polymerization inhibitors, and the like. These examples may be used singly or in combination.

### «Polyurethane having (meth)acryloyl group»

Polyurethanes having (meth)acryloyl group described above can be obtained by, for example, thermal polymerization of the base layer composition containing (meth)acrylate, polyol, isocyanate, urethane bond forming catalyst, foam stabilizer, solvent,.

### -Polyols-

The polyols described above are not particularly restricted and may be appropriately selected in accordance with the application. Examples of polyols include polyether polyols, polyester polyols, polytetramethylene glycol, polybutadiene polyol, alkyleneoxide-modified polybutadiene polyol, polyisoprene polyol, and the like. These examples may be used singly or in combination.

Polyether polyols are preferred among the aforementioned examples in terms of satisfactorily high flexibility and relatively low permanent compression set of a resulting resin.

### -Isocyanates-

The isocyanates described above are not particularly restricted and may be appropriately selected in accordance with the application. Examples of isocyanates include tolylene diisocyanate (TDI), prepolymerized tolylene diisocyanate (prepolymerized TDI), dephenylmethane diisocyanate (MDI), crude dephenylmethane diisocyanate (crude MDI), isophorone diisocyanate (IPDI), hydrogenated diphenylmethane diisocyanate, hydrogenated tolylene diisocyanate, hexamethylene diisocyanate (HDI), isocyanurate-modified products of these isocyanate compounds, carbodiimide-modified products of these isocyanate compounds, glycol-modified products of these isocyanate compounds, and the like. These examples may be used singly or in combination.

Prepolymerized tolylene diisocyanate (prepolymerized TDI) is preferred among the aforementioned examples because prepolymerized TDI has reactivity to form urethane, thereby easily improving the elasticity of the base layer and therefore the elasticity of the laminate.

### -Urethane bond forming catalyst-

The bond forming catalysts described above are not particularly restricted and may be appropriately selected in accordance with the application. Examples of urethane bond forming catalysts include dibutyltin dilaurate, dioctyltin acetate, dioctyltin bis(ethylmalate), dibutyltin bis(oleylmalate), dibutyltin diacetate, dibutyltin thiocarboxylate, dibutyltin dimalate, dioctyltin thiocarboxylate, tin octenoate, monobutyltin oxide, and the like. These examples may be used singly or in combination.

Dibutyltin dilaurate is preferred among the aforementioned examples because dibutyltin dilaurate exhibits high catalytic activity.

### -Foam stabilizers-

The foam stabilizers are not particularly restricted and may be appropriately selected in accordance with the application. Examples of foam stabilizers include silicone foam stabilizers, ionic surfactants, non-ionic surfactants, and the like. These examples may be used singly or in combination.

Silicone foam stabilizers are preferred among the aforementioned examples because silicone-based foam stabilizers provide good foam uniformity.

### -Solvents-

The solvents are not particularly restricted and may be appropriately selected in accordance with the application. Examples of solvents include: alcohols such as methanol, ethanol, isopropyl alcohol; butyl acetate; dimethyl sulfone; dimethyl sulfoxide; tetrahydrofuran; dioxane; toluene; xylene; and the like. These examples may be used singly or in combination.

Butyl acetate is preferred among the aforementioned examples because butyl acetate rapidly evaporates.

### -Blending amount of compound A-

When the polyurethane having (meth)acryloyl group described above is prepared, the compound A is blended preferably in an amount of 1 to 20 parts by mass, more preferably 1 to 5 parts by mass, with respect to 100 parts by mass of the total of the polyol and the isocyanate in the base layer composition.

Blending amounts of the compound A that fall within the aforementioned preferred or more preferred range advantageously makes it is possible to readily improve adhesion between the base layer and the intermediate layer and reduce uncured impurities in the base layer.

### <Intermediate layer>

The laminate of the present disclosure comprises an intermediate layer formed on the base layer.

The intermediate layer is a polymerized product of an intermediate layer composition containing (i) compound B including two or more functional groups in a molecule thereof, at least one of the functional groups being (meth)acryloyl group, and (ii) compound C having two or more functional groups in a molecule thereof, at least one of the functional groups being hydroxyl group.

In the laminate of the present disclosure, the (meth)acryloyl group in the base layer is covalently bonded to the (meth)acryloyl group in the intermediate layer composition, whereby adhesion between the base layer and the intermediate layer of the laminate is improved. Specifically, a mechanism in which (meth)acryloyl groups undergo radical polymerization between the base layer and the intermediate layer composition results in a laminate that exhibits improved adhesion between the base layer and the intermediate layer.

### «Intermediate layer composition»

The intermediate layer composition contains the compound B and the compound C and also optionally contains additional components.

### -Compound B-

The compound B is not particularly restricted and may be appropriately selected in accordance with the application as long as the compound B has two or more functional groups in a molecule thereof and at least one of the functional groups is (meth)acryloyl group. Examples of the compound B include: compounds having two (meth)acryloyl groups in a molecule thereof; urethane (meth)acrylates having an urethane skeleton in a molecule thereof; (meth)acrylates having an epoxy resin skeleton in a molecule thereof; (meth)acrylates having a polyester skeleton in a molecule thereof; (meth)acrylates having amino group in a molecule thereof; . These examples may be used singly or in combination.

Compounds having two (meth)acryloyl groups in a molecule thereof are advantageous among the aforementioned examples because bonds are formed in a three-dimensional manner in the intermediate layer, which further improves the elasticity of the intermediate layer and therefore the elasticity of the laminate as a whole and also further improves the adhesion of the intermediate layer to the base layer and to the surface layer. Urethane (meth)acrylates having an urethane skeleton in a molecule thereof are also advantageous because they further improves the elasticity of the resulting intermediate layer.

### --Urethane (meth)acrylate--

The urethane (meth)acrylates are not particularly restricted and may be appropriately selected in accordance with the application as long as the urethane (meth)acrylate has at least one (meth)acryloyl group (CH₂=CHCO- or CH₂=C(CH₃)CO-) and at least one urethane bond (-NHCOO-) in a molecule thereof. Examples of urethane (meth)acrylates include polybutadiene-based urethane acrylates, carbonate-based urethane acrylates, ester-based urethane acrylates, ether-based urethane acrylates, . These examples may be used singly or in combination.

Ether-based urethane acrylates obtained by polymerization of polyether polyols and isophorone diisocyanate (IPDI) are preferred among the aforementioned examples in terms of satisfactorily high flexibility and relatively low permanent compression set of a resulting product. Ether-based urethane acrylates having a molecular weight in the range of 10,000 to 50,000 are particularly preferred because they have low viscosity and readily improve the elasticity of the intermediate layer.

### -Compound C-

The compound C is not particularly restricted and may be appropriately selected in accordance with the application as long as the compound C has two or more functional groups in a molecule thereof and at least one of the functional groups is hydroxyl group. Examples of the compound C include: hydroxyl group-containing (meth)acrylates having hydroxyl group and (meth)acryloyl group in a molecule thereof; hydroxyl group-containing acrylic resins; hydroxyl group-containing epoxy resins, . These examples may be used singly or in combination.

The hydroxyl group-containing (meth)acrylates are advantageous among the aforementioned examples because bonds are formed in a three-dimensional manner in the intermediate layer, which further improves the elasticity of the intermediate layer and therefore the elasticity of the laminate as a whole and also further improves the adhesion of the intermediate layer to the base layer and to the surface layer. Of note, as hydroxyl groups are introduced into the intermediate layer, the hydroxyl groups react with isocyanate groups in a surface layer composition described below to form urethane bonds, thereby further enhancing the adhesion between the intermediate layer and the surface layer.

### --Hydroxyl group-containing (meth)acrylate--

The hydroxyl group-containing (meth)acrylates are not particularly restricted and may be appropriately selected in accordance with the application as long as they are (meth)acrylates having hydroxyl group in a molecule thereof. Examples of hydroxyl group-containing (meth)acrylates include 2-hydroxyethyl acrylate, 2-hydroxypropyl acrylate, 2-hydroxyethyl methacrylate, 4-hydroxybutyl acrylate, pentaerythritol triacrylate, pentaerythritol tetraacrylate, EO-modified isocyanurate diacrylate, dipentaerythritol pentaacrylate, dipentaerythritol hexaacrylate, 1,4-cyclohexanedimethanol monoacrylate, bisphenol A diglycidyl ether acrylic acid adduct, N-hydroxyethyl acrylamide, 2-hydroxy-3-(acryloyloxy)propyl methacrylate, and the like. These examples may be used singly or in combination.

2-Hydroxyethyl acrylate is preferred among the aforementioned examples in terms of reducing costs and achieving satisfactory adhesion between the layers.

### Blending ratio of compound B and compound C

The mass blending ratio of the compound B and the compound C in the intermediate layer composition is preferably in the range of 30:70 to 95:5, more preferably in the range of 40:60 to 95:5, although the blending ratio is not particularly restricted and may be appropriately selected in accordance with the application.

Mass blending ratios of the compound B and the compound C that fall within the preferable or more preferable range are advantageous because the viscosity of the intermediate layer composition is made suitable for stable coating to achieve good processability of the composition and also improves the elasticity of the intermediate layer.

### -Additional components optionally included in the intermediate layer composition-

The intermediate layer composition comprises at least one photopolymerization initiator. Additional components which are optionally included in the intermediate layer composition are not particularly restricted and may be appropriately selected in accordance with the application. Examples of additional components include photopolymerization promoters, fine particles, ion conductive agents, fillers, peptizers, foaming agents, plasticizers, softening agents, tackifiers, anti-tack agents, separation agents, mold-releasing agents, bulking agents, colorants, cross-linking agents, vulcanizing agents, polymerization inhibitors, . These examples may be used singly or in combination.

The intermediate layer is formed preferably by irradiating the intermediate layer composition coated on the base layer with energy rays such as ultraviolet rays, electron beam. The irradiation causes reactions to occur between the (meth)acryloyl group in the base layer and the (meth)acryloyl group in the intermediate layer composition, wherein the intermediate layer composition comprises a photopolymerization initiator, thereby improving the adhesion between the base layer and the intermediate layer. Of note, hydroxyl groups remain intact in the intermediate layer obtained by irradiation with energy rays. The coating method is the same as that to be described later.

### <Surface layer>

The laminate of the present disclosure comprises a surface layer formed on the intermediate layer.

The surface layer is a polymerized product of a surface layer composition containing at least compound D having an isocyanate group in a molecule thereof.

In the laminate of the present disclosure, the hydroxyl group in the intermediate layer is covalently bonded to the isocyanate group in the surface layer composition, whereby adhesion between the intermediate layer and the surface layer of the laminate is improved.

Specifically, urethane bonds are formed between the intermediate layer and the surface layer composition, which urethane bonds improve adhesion between the intermediate layer and the surface layer of the laminate.

### «Surface layer composition»

The surface layer composition contains the compound D and also optionally contains additional component(s).

### -Compound D-

The compound D is not particularly restricted and may be appropriately selected in accordance with the application as long as the compound D has isocyanate groups in a molecule thereof. Examples of the compound D include tolylene diisocyanate (TDI), prepolymerized tolylene diisocyanate (prepolymerized TDI), dephenylmethane diisocyanate (MDI), crude dephenylmethane diisocyanate (crude MDI), isophorone diisocyanate (IPDI), hydrogenated diphenylmethane diisocyanate, hydrogenated tolylene diisocyanate, hexamethylene diisocyanate (HDI), isocyanurate-modified products of these isocyanate compounds, carbodiimide-modified products of these isocyanate compounds, glycol-modified products of these isocyanate compounds, . These examples may be used singly or in combination.

Prepolymerized tolylene diisocyanate (prepolymerized TDI) is preferred among the aforementioned examples because prepolymerized TDI has high reactivity to form urethane, thereby easily improving the elasticity of the surface layer and therefore the elasticity of the laminate.

### -Additional components optionally included in the surface layer composition-

Additional components optionally included in the surface layer composition are not particularly restricted and may be appropriately selected in accordance with the application. Examples of additional components include polyols, photopolymerization initiators, photopolymerization promoters, urethane bond forming catalysts, fine particles, surface modifiers, solvents, (meth)acrylates, foam stabilizers, ion conductive agents, fillers, peptizers, foaming agents, plasticizers, softening agents, tackifiers, anti-tack agents, separation agents, mold-releasing agents, bulking agents, colorants, cross-linking agents, vulcanizing agents, polymerization inhibitors, . These examples may be used singly or in combination.

The use of polyol and urethane bond forming catalyst, among the aforementioned examples, in the surface layer composition is advantageous because urethane bonds are formed between the isocyanate groups in the surface layer composition and the hydroxyl groups in the intermediate layer while forming polyurethane that serves as the surface layer. Thus, simple heating of the surface layer composition on the intermediate layer simultaneously achieves both the formation of the surface layer and better adhesion between the surface layer and the intermediate layer.

The polyol, the urethane bond forming catalyst, the solvent and the foam stabilizer which can be used are the same as those described in connection with the base layer composition. The (meth)acrylates which can be used are the same as those described as the compound A in connection with the base layer composition.

### -Blending of compound D-

The isocyanate INDEX (NCO mole number/OH mole number) of the surface layer composition when the surface layer composition includes a hydroxyl group-containing compound such as polyol is preferably in the range of 0.8 to 4.0, more preferably in the range of 1.1 to 3.0, although it is not particularly restricted and may be appropriately selected in accordance with the application.

Values of isocyanate INDEX (NCO mole number/OH mole number) that fall within the preferred or more preferred range described above are advantageous because it becomes easy to improve adhesion between the surface layer and the intermediate layer and successfully decreases uncured impurities in the surface layer.

It is preferred that the surface layer is formed by heating the surface layer composition coated on the intermediate layer. This heating allows the hydroxyl group in the intermediate layer to be bonded to the isocyanate group in the surface layer composition, thereby improving adhesion between the intermediate layer and the surface layer. The coating method is the same as that described below.

### <Additional layers>

The laminate of the present disclosure optionally includes additional layer(s) other than the base layer, the intermediate layer formed on the base layer, and the surface layer formed on the intermediate layer.

The additional layers are not particularly restricted and may be appropriately selected in accordance with the application. Examples of additional layers include adhesive layers for bonding between the base layer and metal. Examples of metal include a metal shaft of a developing roller.

The laminate of the present disclosure is applicable to a developing roller, a charging roller, a toner supply roller, a transfer roller, a cleaning roller, a fixing roller, and the like. Particularly preferred is a developing roller.

### (Method for manufacturing laminate)

A method of the present disclosure for manufacturing a laminate is a method for manufacturing the laminate of the present disclosure and comprises at least a base layer forming step, an intermediate layer forming step carried out after the base layer forming step, a surface layer forming step carried out after the intermediate layer forming step, and optionally additional step(s).

### <Base layer forming step>

The base layer forming step is a step for forming a base layer by heating a base layer composition containing at least the compound A having a (meth)acryloyl group in a molecule thereof.

The base layer has such a structure as described above.

A method for forming the base layer is not particularly restricted and may be appropriately selected in accordance with the application as long as the base layer composition is properly heated. For example, the base layer may be formed by curing the base layer composition by combination of a heating step and an irradiation step that uses energy rays such as UV rays, infrared rays, visible light, or electron beams.

Formation of the base layer by heating is advantageous because it eliminates the need to perform energy ray irradiation and allows a large number of (meth)acryloyl groups to remain intact in the resulting base layer.

The base layer may be formed by either heating the base layer composition coated on a surface of another member such as a shaft or heating the base layer composition charged in a casting mold.

### «Coating»

The coating method is not particularly restricted and may be appropriately selected in accordance with the application. Examples of coating methods include spraying, roll coater coating, dip coating, die coating, and the like. These methods may be used singly or in combination.

Die coating is preferred among the aforementioned examples in terms of uniformity of a coated film.

### «Heating»

The heating method is not particularly restricted and may be appropriately selected in accordance with the application. Examples of heating methods include heating in an oven.

Heating conditions are not particularly restricted and heating temperature, heating time and the like may be appropriately selected in accordance with components and/or a composition of the base layer composition, the amount of the coated composition,.

### «Ultraviolet irradiation»

The light source for ultraviolet irradiation is not particularly restricted and may be appropriately selected in accordance with the application. Examples of light sources include a mercury lamp, a high pressure mercury lamp, a super high pressure mercury lamp, a metal halide lamp, a xenon lamp, .

Ultraviolent irradiation conditions are not particularly restricted and irradiation intensity, cumulative amount of light, and the like may be appropriately selected in accordance with components and/or a composition of the base layer composition, the amount of the coated composition, and the like.

### <Intermediate layer forming step>

The intermediate layer forming step is a step for forming the intermediate layer on the base layer by: coating the base layer formed by the base layer forming step with the intermediate layer composition containing (i) compound B having two or more functional groups in a molecule thereof, at least one of the functional groups being (meth)acryloyl group and (ii) compound C having two or more functional groups in a molecule thereof, at least one of the functional groups being hydroxyl group; and irradiating the intermediate layer composition with energy rays to allow the (meth)acryloyl group in the base layer to react with the (meth)acryloyl group in the intermediate layer composition.

The intermediate layer has such a structure as described above.

The method for forming the intermediate layer is not particularly restricted and may be appropriately selected in accordance with the application as long as the intermediate layer composition is properly irradiated with energy rays. Examples of methods for forming the intermediate layer include forming methods that use ultraviolet rays, infrared rays, visible light, electron beams, . These methods can be used singly or in combination.

Irradiation of the intermediate layer composition with energy rays allows the (meth)acryloyl group in the base layer to react with the (meth)acryloyl group in the intermediate layer composition, thereby improving adhesion between the base layer and the intermediate layer.

### <Surface layer forming step>

The surface layer forming step is a step for forming the surface layer bonded to the intermediate layer by: coating the intermediate layer thus formed by the intermediate layer forming step with the surface layer composition containing at least compound D having an isocyanate group in a molecule thereof; and heating the surface layer composition to allow the hydroxyl group in the intermediate layer to react with the isocyanate group in the surface layer composition.

### The surface layer has such a structure as described above.

Heating the applied surface layer composition allows the hydroxyl group in the intermediate layer to react with the isocyanate group in the surface layer composition, thereby improving adhesion between the intermediate layer and the surface layer.

### <Additional steps>

Additional steps are not particularly restricted and may be appropriately selected in accordance with the application. Examples of additional steps include steps of cleaning the base layer, the intermediate layer, and the surface layer.

### (Developing member)

A developing member of the present disclosure comprises the laminate described above.

The developing member is not particularly restricted and may be appropriately selected in accordance with the application. Examples of the developing member include a developing roller, a charging roller, a toner supply roller, a transfer roller, a cleaning roller, a fixing roller, .

Particularly preferred is a developing roller as the developing member of the present disclosure because developing rollers particularly require high adhesion between layers and high elasticity.

The developing member of the present disclosure exhibits excellent elasticity and improved adhesion between layers. The improved adhesion between layers of the developing member enhances its resistance against wear stress caused by recent increases in the printing speed of printers, thereby prolonging the life of the developing member.

### <Developing roller >

The developing roller comprises at least a shaft and the aforementioned laminate formed on the shaft. The developing roller can be manufactured by methods known in the art.

FIG. 2 is a sectional view of an example of a developing roller as an embodiment of the developing member according to the present disclosure. A developing roller 5 shown in FIG. 2 comprises a shaft 6 mounted with its ends rotatably supported, and a base layer 2 disposed radially outward of the shaft 6. The developing roller 5 shown in FIG. 2 also comprises an intermediate layer 3 disposed adjacent to and radially outward of the base layer 2. The developing roller 5 shown in FIG. 2 further comprises a surface layer 4 disposed adjacent to and radially outward of the intermediate layer 3.

### «Shaft»

The shaft is not particularly restricted and may be appropriately selected in accordance with the application as long as it has satisfactorily high electric conductivity. Examples of shafts include hollow or solid cylindrical bodies made of metal or resin.

### EXAMPLES

The present disclosure will be described further in detail with reference to Examples hereinafter. The present disclosure, however, is not restricted by these Examples and may be modified in an appropriate manner unless the modifications digress from the spirit of the present disclosure.

Laminates were prepared by the methods described below.

### (Examples 1 to 25 and Comparative Examples 1 to 7)

### <Preparation of prepolymerized TDI>

Prepolymerized TDI was prepared as follows: Excenol 5030 (Asahi Glass Co., Ltd.) and TDI (Mitsui Chemicals, Inc.) were blended in a three-neck flask such that the isocyanate INDEX (NCO mole number/OH mole number) was 4.5. The three-neck flask was heated with a mantle heater at liquid temperature of 70°C for 2 hours. Elimination of polyol was confirmed by the hydroxyl value determination method.

### <Preparation of urethane acrylate oligomer>

Urethane acylate oligomer was prepared as follows: Excenol 3020 (Asahi Glass Co., Ltd.) and isophorone diisocyanate (IPDI) (Evonik Japan Co., Ltd.) were blended in a three-neck flask such that the isocyanate INDEX (NCO mole number/OH mole number) was 1.55. Dibutyltin dilaurate was added in an amount of 0.01 mass% of the total mass of Excenol 3020 and isophorone diisocyanate with stirring at 100 rpm. The three-neck flask was heated with a mantle heater at liquid temperature of 70°C for 2 hours. Elimination of isocyanate was confirmed by infrared absorption analysis (IR).

### <Preparation of base layer compositions>

Polyol mixtures were obtained by blending predetermined amounts (see Tables 1 to 4) of (meth)acrylate as the compound A; 22 parts by mass of "SANNIX FA-951" (Sanyo Chemical Industries, Ltd.) as a polyol; 55 parts by mass of "Kuraray Polyol F-510" (KURARAY CO. LTD.) as a polyol; 22 parts by mass of "Kuraray Polyol F-1010" (KURARAY CO., LTD.) as a polyol; 0.11 parts by mass of "NEOSTANN U-100" (NITTO KASEI KOGYO K.K.) as an urethane bond forming catalyst; and 0.04 parts by mass of "SF-2937F" (Dow Corning Toray Co., Ltd) as a foam stabilizer.

Isocyanate mixtures were obtained by blending 100 parts by mass of the prepolymerized TDI (%isocyanate group = 7%) prepared above as isocyanate and 0.2 parts by mass of "DENKA BLACK" (Denka Company Limited) as carbon black.

The polyol mixture was placed into a mechanical froth foam-injected tank and then the isocyanate mixture was injected into the tank to prepare a base layer composition. The isocyanate mixture was injected such that the isocyanate INDEX (NCO mole number/OH mole number) was 1.1.

### <Production of base layers>

The base layer composition was cast into a mold (φ19), the mold was heated using an oven at 120°C for 30 minutes, and a base layer thus cured was taken out from the mold.

### <Preparation of intermediate layer compositions>

For Comparative Examples 1, 2 and 7 and Examples 1 to 25, intermediate layer compositions were obtained by blending: predetermined amounts (see Tables 1 to 4) of the above-prepared urethane acrylate oligomer as the compound B; predetermined amounts (see Tables 1 to 4) of the above-prepared hydroxyl group-containing (meth)acrylate as the compound C; 0.5 parts by mass of "IRGACURE 184" (BASF Japan Ltd.); and 0.5 parts by mass of "Sankonol PEO20R" (Sanko Chemical Industry Co., Ltd.).

For Comparative Examples 3, 4 and 6, intermediate layer compositions were obtained by blending: predetermined amounts (see Table 3) of the above-prepared urethane acrylate oligomer as the compound B and "Light Acrylate LA" (KYOEISHA CHEMICAL CO., LTD.); 0.5 parts by mass of "IRGACURE 184" (BASF Japan Ltd.); and 0.5 parts by mass of "Sankonol PEO20R" (Sanko Chemical Industry Co., Ltd.). It should be noted that "Light Acrylate LA" is made of lauryl acrylate and does not correspond to the compound C.

For Comparative Example 5, "Polyester LP022" (Nippon Synthetic Chemical Industry Co., Ltd.) was used as the intermediate layer composition. "Polyester LP022" is made of high-molecular weight polyester resin and does not correspond to either the compound B or compound C.

### <Production of intermediate layers>

The intermediate layer compositions thus obtained were applied on the respective base layers to a thickness of 0.5 mm and irradiated with UV rays using the H valve of a UV lamp (Fusion UV Systems, Inc.) to cure the coated films. In this way intermediate layers were produced.

### <Preparation of surface layer compositions>

For Comparative Examples 3, 5 and 7 and Examples 14 to 25, surface layer compositions were obtained by blending: predetermined amounts (see Tables 3 and 4) of a polyol and a surface modifier; 33 parts by mass of "Takenate D140N" (isocyanate, Mitsui Chemicals, Inc.) as the compound D; 12 parts by mass of "Art Pearl C800" (Negami Chemical Industrial Co., Ltd.); 2 parts by mass of "DAIPLACOAT EN2" (Dainichiseika Color & Chemicals Mfg. Co., Ltd.); and 144 parts by mass of methyl ethyl ketone (MEK).

For Comparative Example 4, "UV-3200B" (The Nippon Synthetic Chemical Industry Co., Ltd.) was used as the surface layer composition. "UV-3200B" is made of UV-curable urethane acrylate resin and does not correspond to the compound D.

For Comparative Example 6, "COPONYL N7486" (The Nippon Synthetic Chemical Industry Co., Ltd.) was used as the surface layer composition. "COPONYL N7486" is made of acrylic copolymer resin and does not correspond to the compound D.

### <Production of surface layers >

The surface layer compositions thus obtained were applied on surface of the respective intermediate layers by dipping to a thickness of 20 µm and heated in an oven at 120°C for 60 minutes. In this way surface layers were produced.

Adhesion between the base layer and the intermediate layer and adhesion between the intermediate layer and the surface layer were evaluated by cross-cut adhesion and peel tests described below. The results are shown in Tables 1 to 4.

### <Cross-cut adhesion test>

Cut lines are made on each of the laminate thus produced and a member constituted of the base layer and the intermediate layer (hereinafter referred to as "laminated member") such that an array of 25 square cuts (2 mm × 2 mm size each) with 5 columns and 5 rows was formed. An adhesive cellophane tape No. 29 (Nitto Denko Corporation) was then strongly pressed against the square cuts with a finger and then quickly peeled off. When even a portion of a square cut had been peeled off, it was determined that the square cut had been peeled off. The number of the square cuts which had not been peeled off was counted (when no square cut is peeled off, the test result is expressed as "25/25"). The larger value indicates higher adhesion. For example, when the score is 25/25, the laminate can be suitably applied to, e.g. a developing roller. The test results of adhesion between the base layer and the intermediate layer obtained using the laminated member are shown in Tables 1 and 2, and the test results of adhesion between the intermediate layer and the surface layer obtained using the laminate are shown in Tables 3 and 4.

### <Peel test>

The laminate was cut into a 1 mm-width strip with a punching blade. A slit was cut in between the intermediate layer and the surface layer using a cutter knife. Adhesion between the intermediate layer and the surface layer of the strip of the laminate was measured by the 180° peeling method using "EZ-TEST" (SHIMADZU CORPORATION), where the peeling rate was set to 10 mm/min. Peak test force values for 5 test pieces were measured and averaged. The average values are shown in Tables 3 and 4. Larger values indicate higher adhesion, with ≥ 2N being suitable for example for ensuring the durability of a developing roller.

Similarly, the laminated member was cut into a 1 mm-width strip with a punching cutter. A slit was cut in between the intermediate layer and the surface layer using a cutter knife. Adhesion between the intermediate layer and the surface layer of the strip of the laminated member was measured by the 180° peeling method using "EZ-TEST" (SHIMADZU CORPORATION), where the peeling rate was set to 10 mm/min. Peak test force values for 5 test pieces were measured and averaged. The average values are shown in Tables 1 and 2. Larger values indicate higher adhesion, with ≥ 2N being suitable for example for ensuring the durability of a developing roller.

### <Asker C hardness>

Asker hardness was measured for each of the laminate and the laminated member using a micro durometer ("MD-1", Kobunshi Keiki Co., Ltd.). The results of Asker hardness of the laminated member are shown in Tables 1 and 2, and the results of Asker hardness of the laminate are shown in Tables 3 and 4. Larger values indicate higher hardness and Asker hardness of ≤ 60 ensures suitable application to, e.g. a developing roller. Smaller hardness indicates better flexibility and elasticity.

### <Evaluation of processability of intermediate layer composition>

Processability of the intermediate layer compositions at the time when the base layer was coated by die coating with the intermediate layer composition was evaluated based on filtered waviness (Wa) values. The results are shown in Tables 1 and 2. The evaluation was made according to the three criteria: A (< 0.3 µm); B (0.3 µm to less than 0.5 µm); and C (≥ 0.5 µm). Ranks A and B represent good processability and ensures suitable application to a developing roller, for example.

Tables 1 to 4 below list some of the materials used for the preparation of the base layer compositions, intermediate layer compositions, and surface layer compositions.

**Table 1**

| | Raw materials of coating | | Comp. Example 1 | Comp. Example 2 | Example 1 | Example 2 | Example 3 | Example 4 | Example 5 | Example 6 |
|---|---|---|---|---|---|---|---|---|---|---|
| Base layer | Hydroxyl group-containing (meth)acrylate | "Light Ester HO-A" *1 | - | - | 6 | 6 | 6 | 6 | 6 | 6 |
| | | "Light Acrylate HOP-A" *2 | - | - | - | - | - | - | - | - |
| | | "4-HBA" *3 | - | - | - | - | - | - | - | - |
| | | "HEAA" *4 | - | - | - | - | - | - | - | - |
| | Isocyanate group-containing (meth)acrylate | "Karenz AOI" *5 | - | - | - | - | - | - | - | - |
| | | "Karenz MOI" *6 | - | - | - | - | - | - | - | - |
| | | "Karenz BEI" *7 | - | - | - | - | - | - | - | - |
| Intermediate layer | Urethane acylate oligomer | | 100 | 90 | 95 | 90 | 60 | 40 | 30 | 20 |
| | Hydroxyl group-containing (meth)acrylate | "Light Ester HO-A" *1 | - | 10 | 5 | 10 | 40 | 60 | 70 | 80 |
| | | "Light Acrylate HOP-A" *2 | - | - | - | - | - | - | - | - |
| | | "4-HBA" *3 | - | - | - | - | - | - | - | - |
| Evaluation | Processability of intermediate layer in die coating | | C | A | A | A | A | A | B | C |
| | Hardness | Asker C hardness | 60 | 58 | 58 | 56 | 55 | 55 | 52 | 50 |
| | Evaluation of interlaminar adhesion force between base layer and intermediate layer | Cross-cut adhesion test | 20/25 | 18/25 | 25/25 | 25/25 | 25/25 | 25/25 | 25/25 | 25/25 |
| | | Peel test (N) | 1.2 | 1.1 | 2.2 | 2.1 | 2.2 | 2.2 | 2.3 | 2.2 |

**Table 2**

| | Raw materials of coating | | Example 7 | Example 8 | Example 9 | Example 10 | Example 11 | Example 12 | Example 13 |
|---|---|---|---|---|---|---|---|---|---|
| Base layer | Hydroxyl group-containing (meth)acrylate | "Light Ester HO-A" *1 | - | - | - | - | - | - | 6 |
| | | "Light Acrylate HOP-A" *2 | 6 | - | - | - | - | - | - |
| | | "4-HBA" *3 | - | 6 | - | - | - | - | - |
| | | "HEAA" *4 | - | - | 6 | - | - | - | - |
| | Isocyanate group-containing (meth)acrylate | "Karenz AOI" *5 | - | - | - | 6 | - | - | - |
| | | "Karenz MOI" *6 | - | - | - | - | 6 | - | - |
| | | "Karenz BEI" *7 | - | - | - | - | - | 6 | - |
| Intermediate layer | Urethane acylate oligomer | | 80 | 80 | 80 | 80 | 80 | 80 | 80 |
| | Hydroxyl group-containing (meth)acrylate | "Light Ester HO-A" *1 | 20 | 20 | 20 | 20 | 20 | 20 | 20 |
| | | "Light Acrylate HOP-A" *2 | - | - | - | - | - | - | - |
| | | "4-HBA" *3 | - | - | - | - | - | - | - |
| Evaluation | Processability of intermediate layer in die coating | | A | A | A | A | A | A | A |
| | Hardness | Asker C hardness | 56 | 56 | 56 | 56 | 56 | 56 | 55 |
| | Evaluation of adhesion between base layer and intermediate layer | Cross-cut adhesion test | 25/25 | 25/25 | 25/25 | 25/25 | 25/25 | 25/25 | 25/25 |
| | | Peel test (N) | 2.2 | 2.2 | 2.2 | 2.3 | 2.2 | 2.4 | 2.3 |

**Table 3**

| | Raw materials of coating | | Comp. Example 3 | Comp. Example 4 | Comp. Example 5 | Comp. Example 6 | Comp. Example 7** | Example 14 | Example 15 | Example 16 | Example 17 |
|---|---|---|---|---|---|---|---|---|---|---|---|
| Base layer | Hydroxyl group-containing (meth)acrylate | "Light Ester HO-A" *1 | 6 | 6 | 6 | 6 | - | 6 | 6 | 6 | 6 |
| Intermediate layer | Urethane acylate oligomer | | 80 | 80 | - | 80 | 80 | 80 | 80 | 80 | 80 |
| | (Meth)acrylate | "Light Acrylate LA" *8 | 20 | 20 | - | 20 | - | - | - | - | - |
| | Hydroxyl group-containing (meth)acrylate | "Light Ester HO-A" *1 | - | - | - | - | 20 | 20 | 20 | 20 | 20 |
| | Acrylic tackifier | "Polyester LP022" *9 | - | - | 100 | - | - | - | - | - | - |
| Surface layer | Hydrogenated polybutadiene-based polyol | "EPOL" *10 | 56 | - | 56 | - | 56 | 56 | - | - | - |
| | Carbonate-based polyol | "T5652" *11 | - | - | - | - | - | - | 56 | - | - |
| | Ester-based polyol | "PLACCEL L220AL" *12 | - | - | - | - | - | - | - | 56 | - |
| | Ether-based polyol | "PTG2000SN" *13 | - | - | - | - | - | - | - | - | 56 |
| | Surface modifier | "FS710" *14 | - | - | - | - | - | - | - | - | - |
| | (Silicones) | "Silaplane FM-DA21" *15 | - | - | - | - | - | - | - | - | - |
| | W-curablc urethane acrylate | "UV-3200B" *16 | - | 100 | - | - | - | - | - | - | - |
| | Acrylic resin | "COPONYL N7486" *17 | - | - | - | 100 | - | - | - | - | - |
| Evaluation | Hardness | Asker C hardness | 56 | 57 | 57 | 58 | 59 | 55 | 56 | 56 | 56 |
| | Evaluation of adhe:s ion between intermediate layer and surface layer | Cross-cut adhesion test | 3/25 | 5/25 | 5/25 | 2/25 | 25/25 | 25/25 | 25/25 | 25/25 | 25/25 |
| | | Peel test (N) | 1.1 | 1.1 | 1.5 | 0.8 | 6.8 | 6.6 | 7.5 | 7.4 | 6.2 |

| | | | | | | | | | | | |
|---|---|---|---|---|---|---|---|---|---|---|---|
| **Comparative Example 7 exhibited good adhesion between the intermediate layer and the surface layer, but not between the base layer and the intermediate layer. | | | | | | | | | | | |

When adhesion between the base layer and the intermediate layer was evaluated for Comparative Example 7, the results of the cross-cut adhesion test and the peel test (N) were 19/25 and 1.1, respectively.

**Table 4**

| | Raw materials of coating | | Example 18 | Example 19 | Example 20 | Example 21 | Example 22 | Example 23 | Example 24 | Example 25 |
|---|---|---|---|---|---|---|---|---|---|---|
| Base layer | Hydroxyl group-containing (me th)acry late | "Light Ester HO-A" *1 | 6 | 6 | 6 | 6 | 6 | 6 | 6 | 6 |
| Intermediate layer | Urethane acylate oligomer | | 80 | 80 | 80 | 80 | 80 | 80 | 80 | 80 |
| | (Meth)acrylate | "Light Acrylate LA" *8 | - | - | - | - | - | - | - | - |
| | Hydroxyl group-containing (meth)acrylate | "Light Ester HO-A" *1 | 20 | 20 | 20 | 20 | 20 | 20 | 20 | 20 |
| | Acrylic tackifier | "Polyester LP022" *9 | - | - | - | - | - | - | - | - |
| Surface layer | Hydrogenated polybutadiene-based polyol | "EPOL" *10 | - | - | - | - | - | - | - | - |
| | Canbonate-based polyol | "T5652" *11 | - | - | - | - | - | - | - | - |
| | Ester-based polyol | "PLACCEL L220AL" *12 | 56 | 56 | 56 | 56 | 56 | 56 | 56 | 56 |
| | Ether-based polyol | "PTG2000SN" *13 | - | - | - | - | - | - | - | - |
| | Surface modifier | "FS710" *14 | 5 | 10 | 15 | - | - | - | 5 | 15 |
| | (Silicones) | "Silaplane FM-DA21" *15 | - | - | - | 5 | 10 | 15 | 5 | 15 |
| | UV-curable urethane acrylate | "UV-3200B" *16 | - | - | - | - | - | - | - | - |
| | Acrylic resin | "COPONYL N7486" *17 | - | - | - | - | - | - | - | - |
| Evaluation | Hardness | Asker C hardness | 55 | 56 | 56 | 56 | 56 | 56 | 56 | 56 |
| | Evaluation of adhesion between intermediate layer and surface layer | Cross-cut adhesion test | 25/25 | 25/25 | 25/25 | 25/25 | 25/25 | 25/25 | 25/25 | 25/25 |
| | | Peel test (N) | 7.2 | 7 | 6.8 | 7 | 6.8 | 6.8 | 7.1 | 6.2 |

| | | | | | | | | | | |
|---|---|---|---|---|---|---|---|---|---|---|
| Notes: *1 "Light Ester HO-A": 2-hydroxyethyl acrylate, manufactured by KYOEISHA CHEMICAL CO., LTD. *2 "Light Acrylate HOP-A": 2-hydroxypropyl acrylate, manufactured by KYOEISHA CHEMICAL CO., LTD. *3 "4-HBA": 4-hydroxybutyl acrylate, manufactured by Osaka Organic Chemical Industry Ltd. *4 "HEAA": N-hydroxyethyl acrylamide, manufactured by Kohjin co., Ltd. *5 "Karenz AOI": 2-isocyanatoethyl acrylate, manufactured by Showa Denko K.K. *6 "Karenz MOI": 2-isocyanatoethyl methacrylate, manufactured by Showa Denko K.K. *7 "Karenz BEI": 1,1-bis(acryloyloxymethyl)ethyl isocyanate, manufactured by Showa Denko K.K. *8 "Light Acrylate LA": Lauryl acrylate, manufactured by KYOEISHA CHEMICAL CO., LTD. *9 "Polyester LP022": High molecular weight saturated polyester resin, manufactured by Nippon Synthetic Chemical Industry Co.,Ltd. *10 "EPOL": Hydrogenated IP diol, manufactured by Idemitsu Kosan Co.,Ltd. *11 "T5652": Polycarbonate diol, manufactured by ASAHI KASEI CORPORATION *12 "PLACCEL L220AL": Polycaprolactone diol, manufactured by Daicel Corporation *13 "PTG2000SN": Polytetramethylene glycol, manufactured by Hodogaya Chemical Co., Ltd. *14 "FS710": Acrylic-modified silicone, manufactured by NOF CORPORATION *15 "Silaplane FM-DA21": Hydroxyl group-modified silicone, manufactured by JNC Corporation *16 "UV-3200B": UV-curable urethane acrylate resin, manufactured by The Nippon Synthetic Chemical Industry Co., Ltd. *17 "COPONYL N7486": Acrylic copolymer resin, manufactured by The Nippon Synthetic Chemical Industry Co., Ltd. | | | | | | | | | | |

It is understood from comparison of Comparative Examples 1 and 2 with Example 1 that inclusion of the compound A in the base layer composition and inclusion of the compound B and the compound C in the intermediate layer composition is required for obtaining the effect of the present disclosure of improving both elasticity and adhesion between the layers.

Further, it is understood from comparison of Comparative Example 3 with Examples 14 to 17 that inclusion of the compound C in the intermediate layer composition is required for obtaining the superior effect of the present disclosure of improving both elasticity and adhesion between the layers.

Yet further, it is understood from comparison of Examples 1 to 5 with Example 6 that setting the mass blending ratio of the compound B and the compound C in the intermediate layer composition to be in the range of 30:70 to 95:5 improves the processability of the intermediate layer composition, and further improves the elasticity of the resulting intermediate layer.

Referring to Comparative Example 7, the laminate exhibited superior adhesion between the intermediate layer and the surface layer because the intermediate layer composition contains the compound C and the surface layer composition contains the compound D, but exhibited poor adhesion between the base layer and the intermediate layer due to the lack of the compound A in the base layer composition.

The aforementioned facts reveal the structural and compositional requirements necessitated for obtaining the superior effect of improving adhesion between the layers of the laminate.

### INDUSTRIAL APPLICABILITY

The laminate of the present disclosure is suitably applicable to a developing roller, a charging roller, a toner supply roller, a transfer roller, a cleaning roller, a fixing roller,.

### REFERENCE SIGNS LIST

- 1: Laminate
- 2: Base layer
- 3: Intermediate layer
- 4: Surface layer
- 5: Developing roller (Developing member)
- 6: Shaft

## Claims

1. A laminate comprising a base layer, an intermediate layer formed on the base layer, and a surface layer formed on the intermediate layer, wherein:
the base layer is a polymerized product of a base layer composition containing at least compound A having a (meth)acryloyl group in a molecule thereof;
the intermediate layer is a polymerized product of an intermediate layer composition containing (i) compound B having two or more functional groups in a molecule thereof, at least one of the functional groups being (meth)acryloyl group, and (ii) compound C having two or more functional groups in a molecule thereof, at least one of the functional groups being hydroxyl group;
the surface layer is a polymerized product of a surface layer composition containing at least compound D having an isocyanate group in a molecule thereof;
the (meth)acryloyl group in the base layer is bonded to the (meth)acryloyl group in the intermediate layer composition; and
the hydroxyl group in the intermediate layer is bonded to the isocyanate group in the surface layer composition.

2. The laminate of claim 1, wherein the compound B has a urethane skeleton in a molecule thereof.

3. The laminate of claim 1 or 2, wherein the compound B has two (meth)acryloyl groups in a molecule thereof and the compound C has a hydroxyl group and a (meth)acryloyl group in a molecule thereof.

4. The laminate of any of claims 1 to 3, wherein a mass blending ratio of the compound B and the compound C in the intermediate layer composition is in the range of 30:70 to 95:5.

5. The laminate of any of claims 1 to 4, wherein the base layer and the surface layer are each made of polyurethane.

6. A developing member comprising the laminate of any of claims 1 to 5.

7. A method for manufacturing the laminate of any of claims 1 to 5, comprising:
a base layer forming step for forming the base layer by heating the base layer composition;
an intermediate layer forming step for forming the intermediate layer on the base layer by coating the base layer formed by the base layer forming step with the intermediate layer composition and irradiating the intermediate layer composition with energy rays to allow the (meth)acryloyl group in the base layer to react with the (meth)acryloyl group in the intermediate layer composition, wherein the intermediate layer composition comprises a photopolymerization initiator; and
a surface layer forming step for forming the surface layer bonded to the intermediate layer by coating the intermediate layer formed by the intermediate layer forming step with the surface layer composition and heating the surface layer composition to allow the hydroxyl group in the intermediate layer to react with the isocyanate group in the surface layer composition.

## Patentansprüche

1. Laminat, beinhaltend eine Basisschicht, eine Zwischenschicht, welche auf der Basisschicht gebildet ist, und eine Oberflächenschicht, welche auf der Zwischenschicht gebildet ist, wobei:
die Basisschicht ein polymerisiertes Produkt einer Basisschichtzusammensetzung ist, welche mindestens eine Verbindung A enthält, welche eine (Meth)acryloylgruppe in einem Molekül davon aufweist;
die Zwischenschicht ein polymerisiertes Produkt einer Zwischenschichtzusammensetzung ist, welche (i) Verbindung B enthält, welche zwei oder mehr Funktionsgruppen in einem Molekül davon aufweist, wobei mindestens eine der Funktionsgruppen eine (Meth)acryloylgruppe ist, und (ii) Verbindung C enthält, welche zwei oder mehr Funktionsgruppen in einem Molekül davon aufweist, wobei mindestens eine der Funktionsgruppen eine Hydroxylgruppe ist;
die Oberflächenschicht ein polymerisiertes Produkt einer Oberflächenschichtzusammensetzung ist, welche mindestens Verbindung D enthält, welche eine Isocyanatgruppe in einem Molekül davon aufweist;
die (Meth)acryloylgruppe in der Basisschicht an die (Meth)acryloylgruppe der Zwischenschichtverbindung gebunden ist; und
die Hydroxylgruppe in der Zwischenschicht an die Isocyanatgruppe der Oberflächenschichtverbindung gebunden ist.

2. Laminat nach Anspruch 1, bei welchen die Verbindung B ein Urethanskelett in einem Molekül davon aufweist.

3. Laminat nach Anspruch 1 oder 2, bei welchem die Verbindung B zwei (Meth)acryloylgruppen in einem Molekül davon aufweist und die Verbindung C eine Hydroxylgruppe und eine (Meth)acryloylgruppe in einem Molekül davon aufweist.

4. Laminat nach einem der Ansprüche 1 bis 3, bei welchem ein Gewichts-Mischungsverhältnis zwischen der Verbindung B und der Verbindung C in der Zwischenschichtzusammensetzung in dem Bereich von 30 zu 70 bis 95 zu 5 liegt.

5. Laminat nach einem der Ansprüche 1 bis 4, bei welchem die Basisschicht und die Oberflächenschicht jeweils aus Polyurethan bestehen.

6. Entwicklungselement, beinhaltend das Laminat nach einem der Ansprüche 1 bis 5.

7. Verfahren zum Herstellen eines Laminates nach einem der Ansprüche 1 bis 5, Folgendes beinhaltend:
einen Schritt des Bildens einer Basisschicht zum Bilden der Basisschicht durch Erhitzen der Basisschichtzusammensetzung;
einen Schritt des Bildens einer Zwischenschicht zum Bilden der Zwischenschicht auf der Basisschicht durch Beschichten der im Schritt des Bildens der Basisschicht gebildeten Basisschicht mit der Zwischenschichtzusammensetzung und Bestrahlen der Zwischenschichtzusammensetzung mit Energiestrahlen, um die (Meth)acryloylgruppe in der Basisschicht in die Lage zu versetzen, mit der (Meth)acryloylgruppe in der Zwischenschichtzusammensetzung zu reagieren, wobei die Zwischenschichtzusammensetzung einen Polymerisierungsinitiator beinhaltet; und
einen Schritt des Bildens einer Oberflächenschicht zum Bilden der an die Zwischenschicht gebundenen Oberflächenschicht durch Beschichten der im Schritt des Bildens der Zwischenschicht gebildeten Zwischenschicht mit der Oberflächenschichtzusammensetzung, und Erhitzen der Oberflächenschichtzusammensetzung um die Hydroxylgruppe in der Zwischenschicht in die Lage zu versetzen, mit der Isocyanatgruppe in der Oberflächenschichtzusammensetzung zu reagieren.

## Revendications

1. Stratifié, comprenant une couche de base ; une couche intermédiaire formée sur la couche de base ; et une couche de surface formée sur la couche intermédiaire, dans lequel :
la couche de base est un produit polymérisé d'une composition de la couche de base contenant au moins un composant A comportant un groupe (méth)acryloyle dans une de ses molécules ;
la couche intermédiaire est un produit polymérisé d'une composition de la couche intermédiaire contenant (i) un composant B comportant deux ou plusieurs groupes fonctionnels dans une de ses molécules, au moins un des groupes fonctionnels étant un groupe (méth)acryloyle, et (ii) un composant C comportant deux ou plusieurs groupes fonctionnels dans une de ses molécules, au moins un des groupes fonctionnels étant un groupe hydroxyle ;
la couche de surface est un produit polymérisé d'une composition de la couche de surface contenant au moins un composant D comportant un groupe isocyanate dans une de ses molécules ;
le groupe (méth)acryloyle dans la couche de base est lié au groupe (méth)acryloyle dans la composition de la couche intermédiaire ; et
le groupe hydroxyle dans la couche intermédiaire est lié au groupe isocyanate dans la composition de la couche de surface.

2. Stratifié selon la revendication 1, dans lequel le composant B comporte un squelette d'uréthane dans une de ses molécules.

3. Stratifié selon les revendications 1 ou 2, dans lequel le composant B comporte deux groupes (méth)acryloyle dans une de ses molécules, le composant C comportant un groupe hydroxyle et un groupe (méth)acryloyle dans une de ses molécules.

4. Stratifié selon l'une quelconque des revendications 1 à 3, dans lequel un rapport de mélange de masse du composant B et du composant C dans la composition de la couche intermédiaire est compris dans l'intervalle allant de 30:70 à 95:5.

5. Stratifié selon l'une quelconque des revendications 1 à 4, dans lequel la couche de base et la couche de surface sont chacune composées de polyuréthane.

6. Elément de développement comprenant le stratifié selon l'une quelconque des revendications 1 à 5.

7. Procédé de fabrication du stratifié selon l'une quelconque des revendications 1 à 5, comprenant :
une étape de formation d'une couche de base pour former la couche de base en chauffant la composition de la couche de base ;
une étape de formation d'une couche intermédiaire pour former la couche intermédiaire sur la couche de base en revêtant la couche de base formée par l'étape de formation de la couche de base de la composition de la couche intermédiaire et en irradiant la composition de la couche intermédiaire avec des rayons d'énergie pour permettre une réaction du groupe (méth)acryloyle dans la couche de base avec le groupe (méth)acryloyle dans la composition de la couche intermédiaire, dans lequel la composition de la couche intermédiaire comprend un initiateur de photopolymérisation ; et
une étape de formation d'une couche de surface pour former la couche de surface liée à la couche intermédiaire en revêtant la couche intermédiaire formée par l'étape de formation de la couche intermédiaire de la composition de la couche de surface et en chauffant la composition de la couche de surface pour permettre une réaction du groupe hydroxyle dans la couche intermédiaire avec le groupe isocyanate dans la composition de la couche de surface.
